# DEMANDE DE BREVET EUROPEEN

(11) **EP 0 629 939 A1**
(43) Date de publication de la demande: **21.12.1994**
(21) Numéro de dépôt: 94401210.3
(22) Date de dépôt: 02.06.1994
(51) Int. Cl.: G05G 25/02, G05G 1/14, B60T 13/567

(54) **Pédalier de commande d'un véhicule automobile**

(30) Priorité: 18.06.1993 FR 9307419
(71) Demandeur: AUTOMOBILES PEUGEOT, F-75116 Paris (FR); AUTOMOBILES CITROEN, F-92200 Neuilly sur Seine (FR)
(72) Inventeur: Meignen, Philippe, F-78100 Saint Germain en Laye (FR); Kindt, Jean-Marie, F-78510 Triel sur Seine (FR)
(74) Mandataire: Pinchon, Odile

(57) **Abrégé**

Le pédalier comporte un support de pédalier (2) fixé sur un tablier (4) de séparation entre l'habitacle (6) et le compartiment moteur (7) du véhicule au niveau d'une ouverture de traversée (5) du tablier (4). Une pédale d'embrayage (15) et une pédale de frein sont montées pivotantes autour d'un axe d'articulation (17) sur le support de pédalier (2), à l'intérieur de l'habitacle (6). Un dispositif de commande (13, 25) est fixé à l'intérieur du compartiment moteur (7). Une paroi d'insonorisation (12) est fixée sur le tablier (4), au niveau de l'ouverture de traversée (5). La paroi (12) entoure le support de pédalier (2) à l'intérieur de l'habitacle (6) et comporte au moins une partie déformable (27), de préférence en forme de soufflet, entourant la pédale (15), depuis son axe d'articulation (17) jusqu'à une zone suivant laquelle la partie de paroi déformable (27) est fixée sur la pédale (15).

## Description

L'invention concerne un pédalier de commande pour un véhicule automobile comportant une paroi d'insonorisation pour limiter et filtrer les bruits provenant du compartiment moteur du véhicule.

Les véhicules automobiles comportent, au poste de conduite, à l'intérieur de l'habitacle, divers moyens de commande et en particulier une pédale de frein et une pédale d'embrayage qui sont généralement montées pivotantes sur un même support de pédalier qui est fixé dans une ouverture du tablier séparant l'habitacle du compartiment moteur du véhicule et qui peut être relié à un ensemble de commande qui comporte des moyens de commande du freinage et des moyens de commande de l'embrayage qui peuvent être actionnés par les pédales qui se déplacent par pivotement, lorsque le conducteur les utilise pour la conduite du véhicule.

Pour faciliter le montage en grande série des pédaliers de commande de frein et d'embrayage, on réalise un assemblage préalable du support de pédalier sur lequel sont montées les pédales et de l'ensemble de commande de frein et d'embrayage, avant de réaliser le montage de l'ensemble sur le véhicule, par l'intérieur du compartiment moteur.

L'ensemble constitué par le support de pédalier et par le dispositif de commande est introduit dans une ouverture traversant le tablier de séparation de l'habitacle et du compartiment moteur et fixé sur le tablier, par exemple par l'intermédiaire de goujons soudés sur le tablier qui sont engagés dans des ouvertures prévues sur une partie d'assemblage du support de pédalier. La fixation est réalisée par des écrous qui sont vissés sur les goujons après mise en place du support de pédalier et du dispositif de commande dans l'ouverture du tablier. Le serrage des écrous d'assemblage permet de plaquer la partie d'assemblage du tablier et la partie périphérique du carter enveloppant le dispositif de commande contre la tôle du tablier. Le montage est réalisé de manière que le support de pédalier et les pédales se trouvent à l'intérieur de l'habitacle et le dispositif de commande entouré de son carter, à l'intérieur du compartiment moteur.

Un joint périphérique en une matière plastique telle que le polyvinylchloréthane ou le polyuréthane est intercalé entre le rebord périphérique du carter et le tablier. Ce joint périphérique permet de limiter la propagation des bruits provenant du compartiment moteur, à l'intérieur de l'habitacle du véhicule. Cependant, l'insonorisation de l'habitacle qui est obtenue de cette manière est insuffisante, la propagation des bruits au niveau du pédalier monté dans une ouverture du tablier restant beaucoup trop importante.

Dans le compartiment moteur, les émissions de bruit sont généralement de l'ordre de 100 dB et le niveau de bruit dans l'habitacle se situe aux environs de 70 dB malgré les moyens d'insonorisation et de filtration des bruits associés au tablier. Cette valeur est encore très éloignée de la valeur de 50 dB qui constitue un objectif à atteindre pour obtenir un très bon confort de l'habitacle du véhicule, ce niveau sonore correspondant au niveau d'une voix humaine s'exprimant de manière douce.

Le tablier de séparation du compartiment moteur et de l'habitacle est généralement revêtu sur la plus grande partie de sa surface, d'une matière d'isolation phonique dont les performances sont satisfaisantes, si bien que la transmission des bruits dans l'habitacle peut être attribuée en grande partie aux discontinuités de la surface d'insonorisation au niveau des traversées du tablier telles que la traversée du pédalier de commande.

On ne connaissait pas jusqu'ici de moyen efficace pour empêcher la transmission des bruits provenant du compartiment moteur, au niveau du pédalier de commande du poste de conduite d'un véhicule.

Le but de l'invention est de proposer un pédalier de commande pour véhicule automobile comportant un support de pédalier fixé sur un tablier de séparation entre l'habitacle et le compartiment moteur du véhicule, au niveau d'une ouverture de traversée du tablier, au moins une pédale montée pivotante autour d'un axe d'articulation sur le support de pédalier, à l'intérieur de l'habitacle et un dispositif de commande fixé à l'intérieur du compartiment moteur, au niveau de l'ouverture de traversée du tablier, de manière à pouvoir être actionné lors d'un pivotement de la pédale, ce pédalier de commande permettant de limiter à un niveau très faible les remontées de bruit provenant du compartiment moteur du véhicule.

Dans ce but, le pédalier de commande suivant l'invention comporte de plus une paroi d'insonorisation fixée sur le tablier au niveau de l'ouverture de traversée, entourant le support de pédalier à l'intérieur de l'habitacle et comportant au moins une partie déformable entourant la pédale depuis son axe d'articulation jusqu'à une zone suivant laquelle la partie de paroi déformable est fixée sur la pédale.

Afin de bien faire comprendre l'invention, on va maintenant décrire, à titre d'exemple non limitatif, en se référant aux figures jointes en annexe, un pédalier de commande d'un véhicule automobile suivant l'invention.

La figure 1 est une vue de face du pédalier vu depuis l'habitacle du véhicule.

La figure 2 est une vue en coupe suivant 2-2 de la figure 1 montrant en particulier la pédale d'embrayage du pédalier.

La figure 3 est une vue en coupe suivant 3-3 de la figure 1 montrant en particulier la pédale de frein du pédalier.

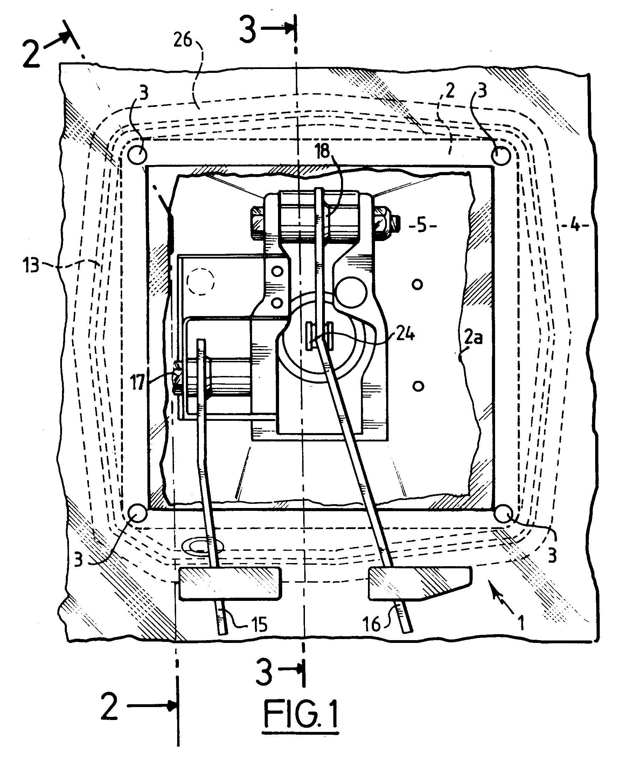

Sur les figures 1, 2 et 3, on voit l'ensemble du pédalier de commande d'un véhicule automobile désigné de manière générale par le repère 1.

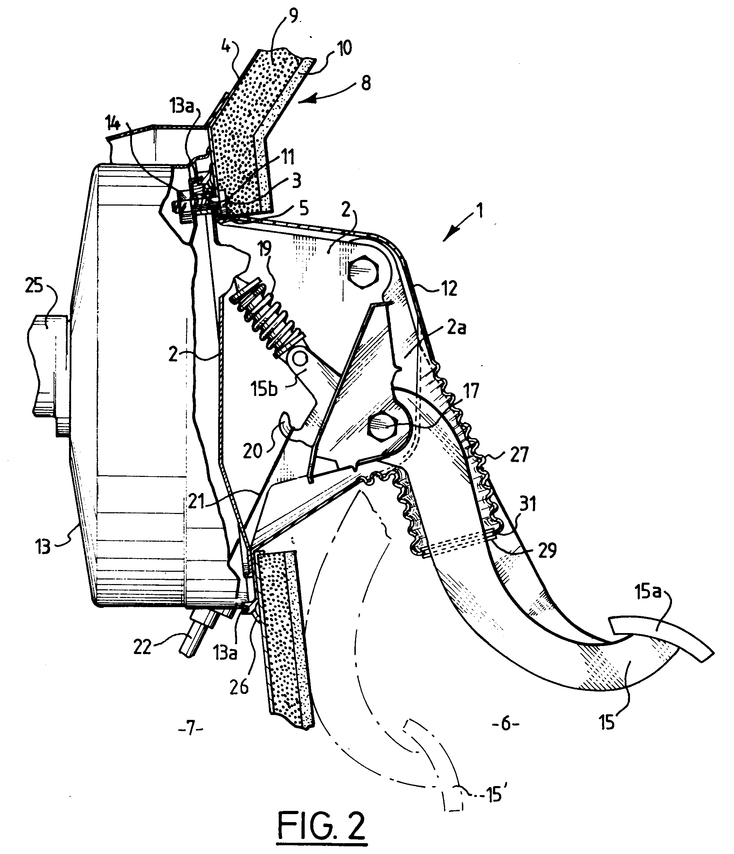

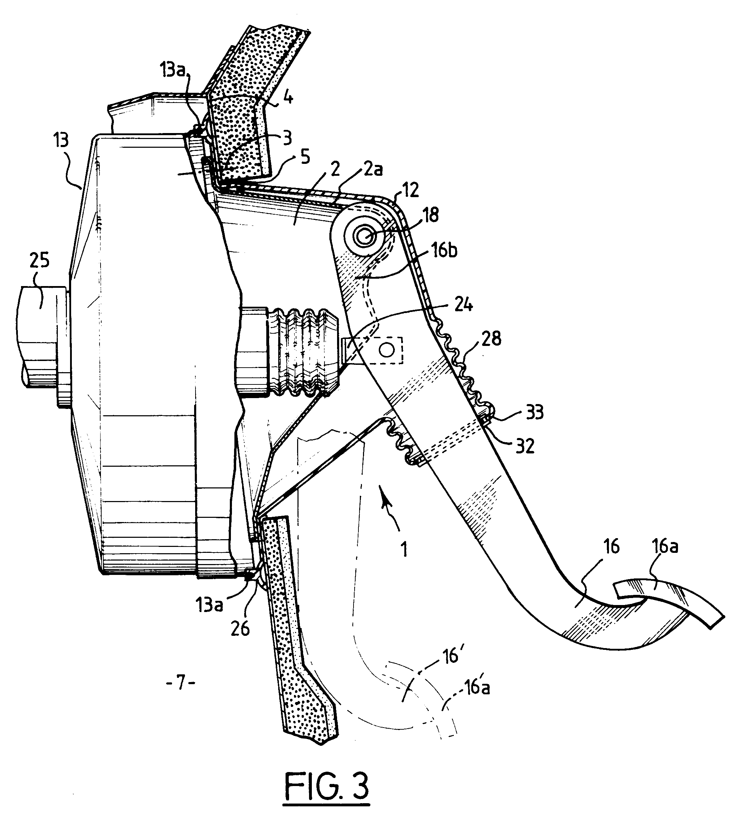

Le pédalier 1 comporte un support de pédalier 2 qui est fixé par des goujons 3 sur le tablier 4 séparant l'habitacle 6 du véhicule du compartiment moteur 7, comme il est visible sur les figures 2 et 3. Le support de pédalier 2 est fixé sur le tablier 4 au niveau d'une ouverture 5 de traversée du tablier mettant en communication le compartiment moteur 7 avec l'habitacle 6 du véhicule.

La paroi du tablier 4 constituée par une tôle métallique est recouverte d'une couche d'insonorisation 8 constituée d'une première couche 9 d'ouate absorbante et d'une seconde couche 10 constituée par le tapis en moquette recouvrant l'intérieur de l'habitacle du véhicule. Cette couche d'insonorisation 8 est interrompue au niveau de l'ouverture de traversée 5 du tablier.

Sur la figure 1, de manière à montrer les organes de fixation et de commande du pédalier, on n'a pas représenté la couche d'isolation du tablier ; le carter 2a du support de pédalier et sa paroi d'insonorisation 12 qui sera décrite plus loin ont été coupés au niveau de l'ouverture 5.

Le pédalier 1 comporte de plus, à l'intérieur du compartiment moteur 7, des organes de commande qui sont fixés à l'intérieur d'un carter 13 ou rapportés sur ce carter.

Le carter 13 des moyens de commande du pédalier et le support de pédalier 2 sont pré-assemblés, avant leur montage sur le véhicule, par l'intermédiaire de parties périphériques de forme annulaire sensiblement planes entre lesquelles sont intercalées des entretoises 11 de forme tubulaire. De plus, les parties périphériques du carter 13 et du support de pédalier 2 sont percées d'ouvertures qui sont alignées avec les alésages des entretoises 11. Les goujons 3 de fixation du pédalier 1 sont mis en place et fixés par soudure sur le tablier 4, de manière à présenter une partie en saillie à l'intérieur du compartiment moteur 7.

Lors du montage du pédalier 1, l'ensemble du pédalier pré-assemblé est engagé dans l'ouverture 5 du tablier par l'intérieur du compartiment moteur, de manière que les ouvertures des parties périphériques du carter 13 et du support de pédalier 2 et les alésages des entretoises 11 viennent s'engager sur les parties en saillie des quatre goujons de fixation 3. Les écrous 14 sont vissés sur la partie d'extrémité des goujons 3, de manière à assurer la fixation du pédalier et le serrage des parties périphériques du carter 13 et du support de pédalier 2. On réalise ainsi de manière très rapide le montage et l'assemblage du pédalier.

Selon l'invention, le pédalier 1 est muni d'une paroi d'insonorisation 12 en forme de cloche en un matériau d'insonorisation tel que le polyvinylchloréthane ou le polyuréthane qui est pré-assemblée et fixée sur le tablier, simultanément au carter 13 et au support de pédalier 12, comme il sera expliqué plus loin.

Le support de pédalier 2 porte deux pédales 15 et 16 qui sont montées pivotantes sur le support de pédalier 2, par l'intermédiaire d'axes respectifs 17 et 18, à l'intérieur de l'habitacle 6 du véhicule.

La pédale 15 est une pédale d'embrayage qui est montée pivotante sur l'axe 17, à l'intérieur de l'habitacle du véhicule, entre une position relâchée 15 ou position embrayée et une position de débrayage 15'.

La pédale 15 comporte une première extrémité 15a à l'extérieur du support de pédalier 2 sur laquelle le conducteur peut exercer une pression avec le pied et une seconde extrémité 15b à l'intérieur du support de pédalier 2 sur laquelle est monté, par l'intermédiaire d'un axe d'articulation, un dispositif de rappel à ressort 19 qui est mis en appui sur une partie de la paroi du support de pédalier 2 fermant l'ouverture 5. La partie interne 15b de la pédale 15 comporte de plus une partie 20 formant un crochet d'attache pour un câble d'embrayage 21 qui est engagé dans un dispositif de guidage 22 fixé sur le carter 13 des moyens de commande, à l'intérieur du compartiment moteur 7.

La pédale de frein 16 représentée sur la figure 3 est montée mobile en pivotement autour de l'axe 18, sur le support de pédalier 2, entre une position relâchée 16 et une position de freinage 16', la pédale de frein pouvant être actionnée par appui du pied du conducteur sur le patin 16a disposé à une première extrémité externe de la pédale de frein 16. La pédale de frein 16 comporte une seconde extrémité interne 16b sur laquelle est montée articulée une tige d'actionnement 24 d'un servomoteur disposé à l'intérieur du carter 13 des moyens de commande. Le maître-cylindre 25 du circuit de freinage du véhicule est monté sur le carter 13, de manière à pouvoir être actionné par la pédale 16, par l'intermédiaire de la tige 24 et du servomoteur.

La paroi d'insonorisation 12 en forme de cloche est réalisée en une matière plastique telle que le polychloréthane ou le polyuréthane qui présente une forte capacité d'absorption des vibrations sonores. La partie concave de la paroi 12 en forme de cloche presente une forme et des dimensions lui permettant de recouvrir l'ensemble de la partie du support de pédalier 2, en saillie dans l'habitacle 6 du véhicule à travers l'ouverture 5 du tablier 4. La paroi 12 comporte de plus une partie périphérique annulaire sensiblement plane dont la partie externe constitue un joint annulaire 26 de forme profilée destinée à venir en appui par l'intermédiaire d'une lèvre souple d'extrémité, sur la surface intérieure du tablier 4, lors du montage du pédalier 1.

Le joint annulaire 26 qui est venu de matière avec la paroi 12 comporte de plus une gorge située à l'opposé de sa partie d'appui, dans laquelle est engagé à force le bord périphérique externe 13a du carter 13 des moyens de commande du pédalier.

La partie plane annulaire périphérique de la paroi 12, à l'intérieur du joint 26, est destinée à recevoir la partie plane périphérique d'assemblage du support de pédalier 2, lors du pré-assemblage du pédalier 1, avant son montage sur Le véhicule.

Comme il est visible sur les figures 2 et 3, la paroi d'insonorisation 12 comporte deux fourreaux souples 28 constitués sous la forme de soufflets qui sont destinés à venir recouvrir la partie interne des pédales 15 et 16 respectivement.

La partie d'extrémité des fourreaux 27 et 28 est fixée sur une partie de la pédale correspondante intermédiaire entre ses extrémités externe et interne par l'intermédiaire d'un anneau élastique comportant une gorge externe dans laquelle est engagée et sertie l'extrémité du fourreau en forme de soufflet 27 ou 28 correspondant.

Comme il est visible sur la figure 2, un anneau élastique 29 engagé sur le levier de la pédale 15 est fixé dans une zone intermédiaire entre l'extrémité externe 15a et l'extrémité interne 15b de la pédale comporte une gorge externe 31 dans laquelle est engagée et sertie l'extrémité du fourreau 27 en forme de soufflet.

De même, un anneau élastique 32 engagé et fixé sur la pédale de frein 16 dans une zone intermédiaire entre l'extrémité externe 16a et l'extrémité interne 16b de la pédale comporte une gorge externe 33 dans laquelle est engagée et sertie la partie d'extrémité du fourreau 28 de la pédale de frein.

Les anneaux 29 et 32 sont engagés à force sur le levier de la pédale correspondante et maintenus par serrage élastique.

Pour le pré-assemblage du pédalier 1, on introduit le support de pédalier 2 à l'intérieur de la partie concave de la paroi 12 en forme de cloche, de manière que la partie périphérique plane du support de pédalier 2 vienne en appui sur la surface intérieure de la partie périphérique plane de la paroi d'insonorisation 12. Les pédales 15 et 16 sont introduites dans les fourreaux correspondants 27 et 28 et les anneaux 29 et 32 sont mis en place de manière à réaliser la fixation des fourreaux 27 et 28 en forme de soufflet.

Les mécanismes de commande et le carter 13 sont mis en place et le rebord 13a du carter 13 est engagé dans la gorge du joint 26 de la paroi d'insonorisation 12. Des entretoises de forme tubulaire sont intercalées entre le carter des dispositifs de commande et le bord périphérique externe du support de pédalier 2, en face d'ouvertures traversant le carter 13, le support de pédalier et la paroi d'insonorisation 12 mis en coïncidence.

L'ensemble du pédalier 1 peut être introduit par l'intérieur du compartiment moteur 7 dans l'ouverture 5 du tablier, de manière que la partie plane périphérique externe de la paroi d'insonorisation 12 vienne en contact avec la surface intérieure du tablier 4, autour de l'ouverture 5. Les ouvertures alignées du carter 13, du support de pédalier 2, des entretoises tubulaires 11 et de la paroi d'insonorisation 12 sont engagées sur les goujons de fixation 3 soudés sur le tablier 4. La fixation du pédalier 1 est assurée par serrage des écrous 14 assurant la mise en appui des bords périphériques du carter 13 et du support de pédalier 2 contre l'entretoise 11. Le bord périphérique plat de la paroi d'insonorisation 12 est serré entre le bord périphérique externe du support de pédalier 2 et la surface intérieure du tablier 4.

On réalise donc la mise en place et le montage du pédalier muni de sa paroi d'insonorisation, de manière simple et rapide.

Lors de l'actionnement des pédales 15 et 16, les fourreaux 27 et 28 en forme de soufflet se déforment en flexion sans opposer de résistance au déplacement de la pédale. Lors du relâchement de la pédale, le soufflet reprend parfaitement sa forme du fait de sa parfaite élasticité en flexion.

Les bruits à l'intérieur du compartiment moteur 7 du véhicule sont absorbés et filtrés par la paroi d'insonorisation 12 et par son joint périphérique 26 et ne sont donc transmis que de manière très atténuée à l'habitacle 6 du véhicule, à travers l'ouverture 5 de traversée du tablier 4.

Les anneaux élastiques 29 et 32 en matière élastique concourrent également à l'insonorisation de l'habitacle. Le dispositif suivant l'invention qui est de forme simple et qui peut être pré-assemblé et monté rapidement sur le véhicule assure donc une continuité de l'isolation phonique et de l'insonorisation du tablier qui est lui-même recouvert par une couche de matériau d'insonorisation qui n'est interrompue qu'au niveau de l'ouverture de traversée du pédalier.

Un pédalier suivant l'invention comportant une paroi d'insonorisation permet d'obtenir un gain d'insonorisation de l'ordre de 20 % et un niveau sonore de l'ordre de 50 dB pour des bruits d'une fréquence de 1000 Hz, à l'intérieur de l'habitacle d'un véhicule, ce qui correspond à de très bonnes conditions de confort à l'intérieur du véhicule.

L'invention ne se limite pas au mode de réalisation qui a été décrit.

C'est ainsi qu'on peut envisager l'utilisation d'une paroi d'insonorisation d'une forme différente de celle qui a été décrite, toute forme concave pouvant être choisie, de manière à être adaptée à la forme du support de pédalier et des pédales.

Il est bien évident que les fourreaux déformables en flexion entourant la partie interne des pédales peuvent être réalisés sous une forme différente d'un soufflet, si ces fourreaux présentent des caractéristiques de déformation en flexion satisfaisantes.

De même, on peut imaginer de fixer l'extrémité des fourreaux sur les pédales d'une manière différente de celle qui a été décrite.

L'invention s'appliquerait bien entendu à un pédalier comportant une seule pédale ou au contraire plus de deux pédales de commande.

L'invention s'applique dans tous les cas où l'on désire améliorer le confort de l'habitacle d'un véhicule automobile de type quelconque.

## Revendications

**1.-** Pédalier de commande pour véhicule automobile comportant un support de pédalier (2) fixé sur un tablier (4) de séparation entre l'habitacle (6) et le compartiment moteur (7) du véhicule, au niveau d'une ouverture (5) de traversée du tablier (4), au moins une pédale (15, 16) montée pivotante autour d'un axe d'articulation (17, 18) sur le support de pédalier (2), à l'intérieur de l'habitacle (6) et un dispositif de commande (13, 22, 25) fixé à l'intérieur du compartiment moteur (7), au niveau de l'ouverture (5) de traversée du tablier (4), de manière à pouvoir être actionné, lors d'un pivotement de la pédale (15, 16), caractérisé par le fait qu'il comporte de plus une paroi d'insonorisation (12) fixée sur le tablier (4) au niveau de l'ouverture de traversée (5), entourant le support de pédalier (2) à l'intérieur de l'habitacle (6) et comportant au moins une partie déformable (27, 28) entourant la pédale (15, 16) depuis son axe d'articulation (17, 18) jusqu'à une zone suivant laquelle la partie de paroi déformable (27, 28) est fixée sur la pédale (15, 16).

**2.-** Pédalier suivant la revendication 1, caractérisé par le fait que la partie déformable (27, 28) de la paroi d'insonorisation (12) est constituée par au moins un fourreau ayant la forme d'un soufflet.

**3.-** Pédalier suivant l'une quelconque des revendications 1 et 2, caractérisé par le fait que la partie de paroi déformable (27, 28) est fixée sur la pédale correspondante (15, 16) par l'intermédiaire d'un anneau élastique (29, 32) engagé à force sur la pédale (15, 16) et comportant une gorge (31, 33) dans laquelle est engagée et sertie l'extrémité de la partie déformable (27, 28).

**4.-** Pédalier suivant l'une quelconque des revendications 1 à 3, caractérisé par le fait que la paroi d'insonorisation (12) en forme de cloche comporte un bord périphérique constitué sous la forme d'un joint (26) destiné à venir en appui sur la surface du tablier (4) dirigée vers le compartiment moteur (7).

**5.-** Pédalier suivant la revendication 4, caractérisé par le fait que le joint (26) comporte une gorge pour le logement d'un bord périphérique (13a) d'un carter (13) du dispositif de commande du pédalier.

**6.-** Pédalier suivant la revendication 5, caractérisé par le fait que le carter (13) du dispositif de commande du pédalier, le support de pédalier (2) et la paroi d'insonorisation (12) comportent des bords plats périphériques percés d'ouvertures alignées, pour la fixation du pédalier (1) par l'intermédiaire de goujons (3) fixés sur le tablier (4) qui sont engagés dans les ouvertures alignées et dans des entretoises (11) intercalées entre le bord périphérique du carter (13) et le bord périphérique du support de pédalier (2), la partie périphérique de la paroi d'insonorisation (12) étant serrée par des écrous de serrage (14) entre la partie périphérique du support de pédalier (2) et une partie de la surface du tablier (4) dirigée vers le compartiment moteur (7), autour de l'ouverture de traversée (5).

**7.-** Pédalier suivant l'une quelconque des revendications 1 à 6, caractérisé par le fait qu'il comporte deux pédales (15, 16), une première pédale (15) étant une pédale d'embrayage et une seconde pédale (16) étant une pédale de frein du véhicule.

**8.-** Pédalier suivant la revendication 7, caractérisé par le fait que les pédales (15, 16) sont engagées chacune à l'intérieur d'une partie déformable de la paroi d'insonorisation (12) ayant la forme d'un fourreau déformable en flexion.
